# EUROPÄISCHE PATENTANMELDUNG

(11) **EP 4 198 802 A1**
(43) Veröffentlichungstag der Anmeldung: **21.06.2023**
(21) Anmeldenummer: 21215747.3
(22) Anmeldetag: 17.12.2021
(51) Int. Cl.: G06F 30/20

(54) **COMPUTERGESTÜTZTE SIMULATION EINES MODULAREN SYSTEMS**

(71) Anmelder: Siemens Aktiengesellschaft, 80333 München (DE)
(72) Erfinder: Agthe, Bernhard, 86899 Landsberg am Lech (DE); Botero Halblaub, Andrés, 85614 Kirchseeon (DE); Held, Harald, 85461 Bockhorn (DE); Lee, Benjamin, 80637 Muenchen (DE); Liebig, Veronika, 80339 München (DE); Sohr, Annelie, 81929 München (DE); Wincheringer, Christoph, 81369 München (DE)
(74) Vertreter: Siemens Patent Attorneys

(57) **Zusammenfassung**

Die Offenbarung betrifft ein computerimplementiertes Verfahren und eine Vorrichtung zum computergestützten Simulieren eines modularen Systems mittels eines computergestützten Simulationsmodells, wobei das computergestützte Simulationsmodell modulspezifische Simulationsmodelle jeweiliger Module (M) des modularen Systems (TS) umfasst, die gemäß einer verteilten Simulationsarchitektur (SA) zumindest teilweise auf einem jeweiligen Modul ausführbar sind. Es wird ein Strukturdatensatz (SSP) bereitgestellt, der dem computergestützten Simulationsmodell (SM) zugeordnet ist und der Typen und Parameter der modulspezifischen Simulationsmodelle der Module, Kopplungen zwischen diesen modulspezifischen Simulationsmodellen der Module und die verteilte Simulationsarchitektur (SA) zum Ausführen des computergestützten Simulationsmodells (SM) beschreibt. Bei einer Änderung eines Moduls des modularen Systems wird der Strukturdatensatz und das computergestützte Simulationsmodell anhand einer Konfigurationsregel (R) und in Abhängigkeit der Kopplungsinformation (LINK) des geänderten Moduls aktualisiert. Anschließend wird die verteilten Simulationsarchitektur (SA) in Abhängigkeit des aktualisierten Strukturdatensatzes (SSP*) aktualisiert und das aktualisierte, computergestützte Simulationsmodell (SM*) wird unter Berücksichtigung der aktualisierten, verteilten Simulationsarchitektur (SA*) ausgeführt.

## Beschreibung

Die Erfindung betrifft ein computerimplementiertes Verfahren und eine Vorrichtung zum computergestützten Simulieren eines modularen Systems, sowie ein Computerprogrammprodukt.

Industrielle Anlagen haben immer häufiger einen modularen Aufbau und umfassen eine Vielzahl von miteinander gekoppelten Modulen/Maschinen. Die einzelnen Module/Maschinen umfassen in der Regel die jeweils benötigte Automatisierungstechnik und Analysefunktionalitäten sowie Rechenkapazitäten, beispielsweise für eine betriebsbegleitende computergestützte Simulation und/oder Analyse. So kann insbesondere auch eine verteilte Simulation und/oder Analyse der modularen Anlage auf Edge-Geräten realisiert werden. Ein computergestütztes Simulationsmodell eines modularen Systems kann insbesondere gemäß dem "System Structure & Parametrization" (SSP) Standard (https://ssp-standard.org/) definiert sein. Für ein modulares System, das sich dynamisch ändert, stellt eine verteilte Simulation allerdings eine Herausforderung dar, denn die Ausführung der Simulation muss im Falle einer Änderung am modularen System entsprechend dynamisch angepasst werden.

Es ist daher eine Aufgabe der Erfindung, die Ausführung einer verteilten Computersimulation für ein veränderliches, modulares System zu vereinfachen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zum computergestützten Simulieren eines modularen Systems mittels eines computergestützten Simulationsmodells des modularen Systems, wobei das computergestützte Simulationsmodell modulspezifische Simulationsmodelle jeweiliger Module des modularen Systems umfasst, die gemäß einer verteilten Simulationsarchitektur zumindest teilweise auf einem jeweiligen Modul ausführbar sind, mit den Verfahrensschritten:
- Einlesen eines Strukturdatensatzes, der dem computergestützten Simulationsmodell zugeordnet ist, wobei der Strukturdatensatz Modultypen und Modulparameter der modulspezifischen Simulationsmodelle der Module, Kopplungen zwischen diesen modulspezifischen Simulationsmodellen der Module beschreibt,
- Detektieren einer Änderung eines Moduls des modularen Systems,
- Ermitteln eines Modultyps des geänderten Moduls und mindestens einer Kopplungsinformation über eine Kopplung des geänderten Moduls mit mindestens einem weiteren Modul des Systems,
- Bereitstellen einer Konfigurationsregel in Abhängigkeit des Modultyps des geänderten Moduls,
- Aktualisieren des Strukturdatensatzes und des computergestützten Simulationsmodells anhand der Konfigurationsregel und in Abhängigkeit der Kopplungsinformation des geänderten Moduls,
- Ausgeben eines aktualisierten Strukturdatensatzes, der eine aktualisierte, verteilte Simulationsarchitektur umfasst, und eines aktualisierten, computergestützten Simulationsmodells, und
- Ausführen des aktualisierten, computergestützten Simulationsmodells unter Berücksichtigung der aktualisierten, verteilten Simulationsarchitektur.

Die Erfindung betrifft gemäß einem zweiten Aspekt eine Vorrichtung zum computergestützten Simulieren eines modularen Systems mittels eines computergestützten Simulationsmodells des modularen Systems, wobei das computergestützte Simulationsmodell modulspezifische Simulationsmodelle jeweiliger Module des modularen Systems umfasst, die gemäß einer verteilten Simulationsarchitektur zumindest teilweise auf einem jeweiligen Modul ausführbar sind, umfassend:
- eine erste Schnittstelle, die derart eingerichtet ist, einen Strukturdatensatz, der dem computergestützten Simulationsmodell zugeordnet ist, einzulesen, wobei der Strukturdatensatz Modultypen und Modulparameter der modulspezifischen Simulationsmodelle der Module, Kopplungen zwischen diesen modulspezifischen Simulationsmodellen der Module und die verteilte Simulationsarchitektur zum Ausführen des computergestützten Simulationsmodells beschreibt,
- eine Detektionseinheit, die derart eingerichtet ist, eine Änderung eines Moduls des modularen Systems zu detektieren,
- eine Analyseeinheit, die derart eingerichtet ist, einen Modultyp des geänderten Moduls und mindestens eine Kopplungsinformation über eine Kopplung des Moduls mit mindestens einem weiteren Modul des Systems zu ermitteln,
- eine zweite Schnittstelle, die derart eingerichtet ist, eine Konfigurationsregel in Abhängigkeit des Modultyps des geänderten Moduls bereitzustellen,
- eine Aktualisierungseinheit, die derart eingerichtet ist, den Strukturdatensatz und das computergestützten Simulationsmodells anhand der Konfigurationsregel und in Abhängigkeit der Kopplungsinformation des geänderten Moduls zu aktualisieren, und einen aktualisierten Strukturdatensatz, der eine aktualisierte, verteilte Simulationsarchitektur umfasst, und ein aktualisiertes, computergestütztes Simulationsmodell auszugeben, und
- eine Ausführungseinheit, die derart eingerichtet ist, das aktualisierte computergestützten Simulationsmodell unter Berücksichtigung der aktualisierten, verteilten Simulationsarchitektur auszuführen.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Einheit" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einem "modularen System" oder einem "modularen, technischem System" kann insbesondere eine industrielle Anlage, wie z.B. eine Produktionsanlage, Fabrikanlage oder Prozessanlage, verstanden werden. Beispielsweise umfasst eine solche industrielle Anlage eine Vielzahl von (technischen) Modulen, wie z.B. Geräten, Maschinen oder fahrerlose Transportfahrzeuge (engl. Automated Guided Vehicle, AGV), die miteinander gekoppelt sind, d.h. beispielsweise Daten oder physikalische Produkte/Gegenstände austauschen. Ein modulares System kann beispielsweise auch ein Energienetz sein, welches eine Vielzahl von Verbrauchern und Energieproduzenten umfassen kann. Die Module eines modularen Systems können insbesondere dynamisch veränderbar sein, wie z.B. hinzugefügt, entfernt, umorganisiert und/oder modifiziert/umkonfiguriert werden. Beispielsweise kann ein AGV eine industrielle Anlage verlassen und somit (zumindest temporär) nicht mehr als Teil der industriellen Anlage betrachtet werden.

Unter einem "computergestützten Simulationsmodell" eines technischen Systems bzw. eines modularen (technischen) Systems kann insbesondere ein digitaler Zwilling des technischen Systems verstanden werden. Das computergestützte Simulationsmodell ist insbesondere dazu eingerichtet, ein technisches, chemisches und/oder physikalisches Verhalten des technischen Systems abzubilden bzw. zu modellieren. Ein modulspezifisches Simulationsmodell ist ebenso vorzugsweise computergestützt und ist ausgebildet, das jeweilig zugeordnete Modul zu simulieren. Vorzugsweise können ein Modultyp und/oder Modulparameter eines Moduls entsprechend im zugeordneten modulspezifischen Simulationsmodell definiert sein.

Ein Modul einer modularen Anlage kann insbesondere ein Edge-Gerät umfassen oder als ein Edge-Gerät ausgestaltet sein, welches Rechenkapazitäten umfasst, um beispielsweise ein jeweiliges modulspezifisches Simulationsmodell auszuführen.

Unter einer "verteilten Simulationsarchitektur" kann insbesondere eine Hardware- oder Software-Architektur verstanden werden, die eine Vielzahl von verteilten bzw. dezentralen Prozessoren umfasst. Beispielsweise handelt es sich dabei um eine Vielzahl von Edge-Geräten, die jeweils einen Teil der computergestützten Simulation ausführen. Die verteile Simulationsarchitektur gibt insbesondere an, auf welcher Hardware zumindest ein Teil eines computergestützten Simulationsmodells ausgeführt wird.

Unter einem "Strukturdatensatz" kann im Zusammenhang mit der Erfindung insbesondere ein Datensatz oder eine Datenstruktur verstanden werden, wie z.B. ein Dokument, das gemäß dem SSP-Standard eingerichtet ist. Der Strukturdatensatz ist insbesondere eindeutig dem computergestützten Simulationsmodell zugeordnet. Somit wird das computergestützte Simulationsmodell und die dafür definierte Simulationsarchitektur durch den Strukturdatensatz beschrieben.

Unter einer "Konfigurationsregel" kann insbesondere eine Vorschrift zum Konfigurieren und/oder Ändern des Strukturdatensatzes und/oder des computergestützten Simulationsmodells verstanden werden. Vorzugsweise ist die Konfigurationsregel für ein jeweiliges Modul anhand des Modultyps vorab definiert. Beispielsweise umfasst die Konfigurationsregel mindestens eine Vorschrift, wie ein Simulationsmodell eines neu hinzugefügten Moduls des jeweiligen Modultyps an ein Simulationsmodell eines bestehenden Moduls des modularen Systems gekoppelt werden soll. Unter "Kopplung" von Modulen kann beispielsweise eine (drahtlose oder drahtgebundene) Kommunikations- oder Datenverbindung, eine physikalische Verbindung und/oder eine Interaktion zwischen den jeweiligen Modulen verstanden werden. Eine Kopplung erfolgt insbesondere über geeignete Schnittstellen.

Es ist ein Vorteil der vorliegenden Erfindung, dass bei einer Änderung des modularen Systems, wie z.B. beim Entfernen oder Hinzufügen eines Moduls, das entsprechende computergestützte Simulationsmodell des modularen Systems automatisch angepasst und auf der entsprechend angepassten Simulationsarchitektur ausgeführt werden kann. Dazu wird insbesondere der Strukturdatensatz automatisch aktualisiert, so dass der aktualisierte Strukturdatensatz den geänderten Aufbau des modularen Systems sowie die geänderte Simulationsarchitektur beschreibt.

Mit der Erfindung können insbesondere Kosten eingespart werden, da die Anpassungen an der Simulation automatisch erfolgen können. Außerdem wird die Funktionalität einer computergestützten Simulation eines modularen Systems verbessert, da Änderungen am modularen System flexibler und schneller abgebildet werden können. Insbesondere lässt sich mittels der Erfindung schneller auf Änderungen reagieren, wenn beispielsweise ein Modul unerwartet ausfällt und gegebenenfalls auch die verteilte Simulationsarchitektur angepasst werden muss.

In einer vorteilhaften Ausführungsform kann die Simulationsarchitektur mittels eines Optimierungsverfahrens zur optimierten Verteilung einer Rechenleistung aktualisiert werden.

Damit kann insbesondere die Simulationsarchitektur optimal angepasst werden, d.h. eine optimale Verteilung der Berechnungen auf verfügbarer Edge- und/oder Cloud-Hardware. Beispielsweise kann die Verteilung der Rechenleistung der genutzten Hardware hinsichtlich Kosten und/oder Energieverbrauch optimiert werden.

In einer weiteren Ausführungsform kann eine Änderung eines Moduls des modularen Systems ein Hinzufügen eines neuen Moduls, ein Entfernen eines vorhandenen Moduls und/oder eine Umorganisation oder Neukonfiguration von mindestens einem vorhandenen Modul des modularen Systems umfassen.

Ein modulares System kann insbesondere verändert werden, indem ein Modul hinzugefügt, entfernt oder ein vorhandenes Modul umkonfiguriert oder umorganisiert wird. Dies kann beispielsweise mit einem geeigneten Detektor, wie z.B. einer Kamera, ermittelt werden. Eine Änderung kann insbesondere durch regelmäßiges Überwachen der vorhandenen Module des modularen Systems detektiert werden.

In einer weiteren Ausführungsform kann eine Änderung eines Moduls des modularen Systems eine Änderung einer Rechenleistung eines Moduls des Systems zum Ausführen des jeweiligen modulspezifischen Simulationsmodells umfassen.

Beispielsweise kann sich eine Gesamtrechenleistung für das modulare System ändern, wenn ein Modul entfernt wird, auf welchem zumindest ein Teil der computergestützten Simulation ausgeführt werden kann.

In einer weiteren Ausführungsform können der Strukturdatensatz und das computergestützte Simulationsmodell in Abhängigkeit der Modulparameter des modulspezifischen Simulationsmodells des geänderten Moduls aktualisiert werden.

Dadurch kann auch auf eine dynamische Modifikation eines Parameters eines Moduls reagiert werden und der Strukturdatensatz und das Simulationsmodell können entsprechend angepasst werden.

In einer weiteren Ausführungsform kann die Konfigurationsregel von mindestens einem Modulparameter des modulspezifischen Simulationsmodells des geänderten Moduls abhängig sein.

Damit kann beispielsweise spezifisch auf Änderungen eines Parameters eines Moduls reagiert und der Strukturdatensatz und die computergestützte Simulation können entsprechend angepasst werden.

In einer weiteren Ausführungsform kann der Strukturdatensatz gemäß dem "System Structure & Parametrization"-Standard definiert sein.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein Ausführungsbeispiel des erfindungsgemäßen Verfahrens zum Simulieren eines modularen Systems; und
- Fig. 2:: ein Ausführungsbeispiel der erfindungsgemäßen Vorrichtung zum Simulieren eines modularen Systems.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

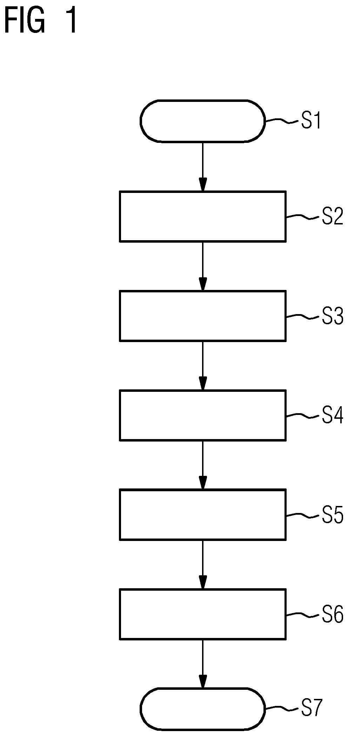

Figur 1 zeigt als erstes Ausführungsbeispiel der Erfindung ein Flussdiagramm mit den Verfahrensschritten eines computerimplementierten Verfahrens zum Simulieren eines modularen Systems. Das modulare System kann beispielsweise eine industrielle Anlage sein.

Beispielsweise kann eine computergestützte Simulation parallel zum Betrieb der industriellen Anlage durchgeführt werden, um die industrielle Anlage beispielsweise zu steuern und/oder um Analysen, wie z.B. Fehlerursachenanalysen, an der Anlage durchzuführen. Eine Steuerung der Anlage kann beispielsweise anhand eines Ergebnisses der computergestützten Simulation erfolgen.

Das computergestützte Simulationsmodell kann eine Vielzahl von modulspezifischen Simulationsmodellen umfassen, die jeweils die Module der modularen Anlage abbilden. Ein jeweiliges modulspezifisches Simulationsmodell umfasst vorzugsweise Informationen über den jeweiligen Modultyp, wie z.B. "fahrerloses Transportfahrzeug", als auch Modulparameter und entsprechende Werte der Modulparameter, wie z.B. Geschwindigkeit. Zumindest teilweise können die modulspezifischen Simulationsmodelle auf dem jeweiligen Modul ausgeführt werden. Damit lässt sich eine verteilte Simulationsarchitektur für das computergestützte (Gesamt-)Simulationsmodell der Anlage erzielen.

Vorzugsweise wird das im Folgenden beschriebene Verfahren bei einer Änderung am bzw. des modularen Systems durchgeführt. Alternativ kann das Verfahren in vorgegebenen Zeitschritten ausgeführt bzw. wiederholt werden.

Im ersten Schritt S1 des Verfahrens wird ein Strukturdatensatz, der dem computergestützten Simulationsmodell zugeordnet ist, bereitgestellt. Der Strukturdatensatz beschreibt Modultypen, d.h. eine Art/ein Typ eines Moduls, und Modulparameter, d.h. Parameter und Parameterwerte, der modulspezifischen Simulationsmodelle der Module, Kopplungen zwischen diesen modulspezifischen Simulationsmodellen und die verteilte Simulationsarchitektur. Die Kopplungen zwischen den modulspezifischen Simulationsmodellen entsprechen vorzugsweise den Kopplungen der entsprechenden realen Module der modularen Anlage. Eine Kopplung kann beispielsweise ein Datenaustausch über eine Schnittstelle, eine physische Verknüpfung oder eine Abhängigkeit (z.B. bei Prozessschritten) sein. Insbesondere kann der Strukturdatensatz gemäß dem "System Structure & Parametrization"-Standard definiert sein.

Im nächsten Schritt S2 wird eine Änderung eines Moduls des modularen Systems detektiert. Beispielsweise kann ein Sensor erfassen, dass ein Modul hinzugefügt, entfernt, umkonfiguriert und/oder umorganisiert wird. Bei der industriellen Anlage kann zum Beispiel ein Modul deaktiviert oder entfernt werden. Alternativ kann ein bewegliches Modul, wie z.B. ein Transportfahrzeug, mit dem modularen System gekoppelt werden. Aus der Änderung am modularen System folgt, dass das zugeordnete Simulationsmodell des modularen Systems gemäß dieser Änderung angepasst und auf einer ebenso aktualisierten Simulationsarchitektur ausgeführt werden soll.

Eine Änderung kann insbesondere auch eine geänderte Rechenkapazität eines Moduls betreffen. Beispielsweise kann eine Rechenleistung erhöht, nicht ausreichend sein oder temporär nicht zur Verfügung stehen.

Für das identifizierte, geänderte Modul (d.h., das entfernte, hinzugefügte, umkonfigurierte oder umorganisierte Modul) wird insbesondere ein modulspezifisches Simulationsmodell bereitgestellt. Beispielsweise kann zu einem neu hinzugefügten Modul ein zugeordnetes modulspezifisches Simulationsmodell eingelesen werden. Das jeweilige modulspezifische Simulationsmodell umfasst spezifische Informationen und Parameter des jeweiligen Moduls und ist dazu eingerichtet, dieses Modul computergestützt zu simulieren.

Im nächsten Schritt S3 werden der Modultyp des geänderten Moduls und mindestens eine Kopplungsinformation über eine Kopplung des geänderten Moduls mit mindestens einem weiteren Modul des modularen Systems ermittelt. Diese Kopplungen können mittels der jeweiligen modulspezifischen Simulationsmodelle abgebildet werden.

Der Modultyp des geänderten Moduls und mindestens eine Kopplungsinformation über eine Kopplung des geänderten Moduls mit mindestens einem weiteren Modul des modularen Systems können beispielsweise auch direkt anhand des modulspezifischen Simulationsmodells des geänderten Moduls ermittelt werden.

Beispielsweise kann bei einem fahrerlosen Transportfahrzeug eine Art der Kopplung mit anderen Modulen des Systems, wie z.B. Aufladen eines Gegenstands von einem Förderband, bestimmt werden. Außerdem können zusätzlich noch Modulparameter und Parameterwerte des geänderten Moduls ermittelt und bereitgestellt werden.

Im nächsten Schritt S4 wird anhand des Modultyps eine Konfigurationsregel bereitgestellt. Vorzugsweise wird die Konfigurationsregel für einen Modultyp vorab definiert. Die Konfigurationsregel kann insbesondere auch in Abhängigkeit der Modulparameter des modulspezifischen Simulationsmodells des geänderten Moduls definiert sein.

Die Konfigurationsregel bestimmt beispielsweise für ein jeweiliges modulspezifisches Simulationsmodell eine Nutzungsweise des Moduls und/oder eine Kopplung an ein weiteres modulspezifisches Simulationsmodell. Beispielsweise legt die Konfigurationsregel fest, dass ein Modul beim Hinzufügen zu dem modularen System mit einem vorgegebenen Modul gekoppelt wird und folglich die jeweiligen modulspezifischen Simulationsmodelle entsprechend miteinander verknüpft werden müssen. Die Konfigurationsregel bestimmt somit insbesondere auch die Änderungen am Strukturdatensatz.

Im nächsten Schritt S5 wird der Strukturdatensatz und das computergestützte Simulationsmodell anhand der Konfigurationsregel und in Abhängigkeit der Kopplungsinformation des geänderten Moduls aktualisiert. Zusätzlich können der Strukturdatensatz und das computergestützte Simulationsmodell in Abhängigkeit der Modulparameter des modulspezifischen Simulationsmodells des geänderten Moduls aktualisiert werden.

Insbesondere wird zunächst die Konfiguration der Module im Strukturdatensatz aktualisiert. Anschließend wird die verteilte Simulationsarchitektur dem geänderten modularen System angepasst. Dazu wird in Abhängigkeit des aktualisierten Strukturdatensatzes, der nun die geänderte Konfiguration des modularen Systems beschreibt, die verteilte Simulationsarchitektur aktualisiert. Vorzugsweise kann die Aktualisierung der Simulationsarchitektur mittels eines Optimierungsverfahrens zur Optimierung der verteilten Rechenleistung hinsichtlich Energie- und/oder Kostenverbrauch erfolgen.

Im nächsten Schritt S6 wird der aktualisierte Strukturdatensatz, der insbesondere die aktualisierte, verteilte Simulationsarchitektur umfasst, und das aktualisierte, computergestützte Simulationsmodell ausgegeben.

Im nächsten Schritt S7 kann das aktualisierte, computergestützte Simulationsmodell unter Berücksichtigung der aktualisierten, verteilten Simulationsarchitektur angewandt werden.

Die computergestützte Simulation wird somit auf der aktualisierten Simulationsarchitektur ausgeführt. Beispielsweise kann die modulare Anlage anhand einer betriebsbegleitenden Simulation gesteuert und/oder analysiert werden.

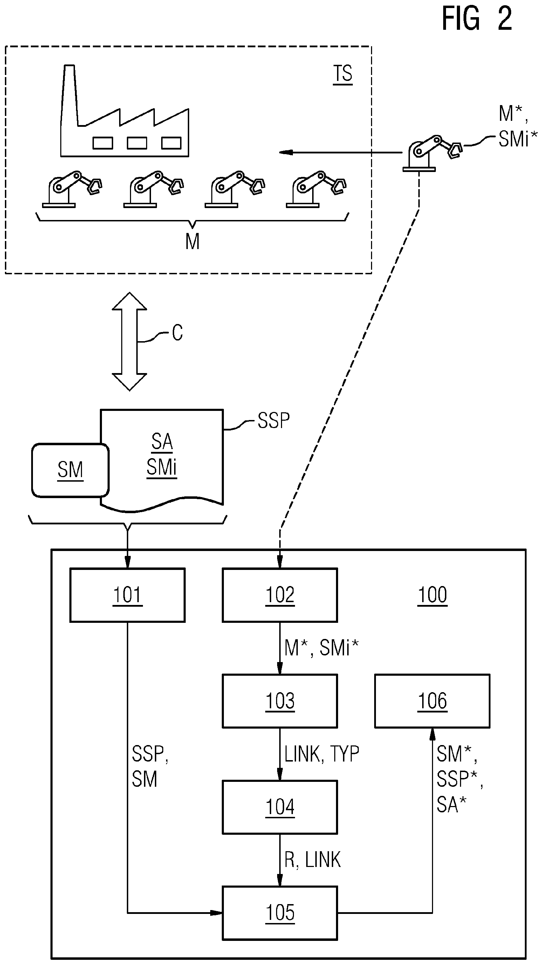

Figur 2 zeigt ein Ausführungsbeispiel der erfindungsgemäßen Vorrichtung 100 zum computergestützten Simulieren eines modularen, technischen Systems TS in schematischer Blockdarstellung.

Das modulare, technische System TS kann beispielsweise eine modulare, industrielle Anlage sein, die eine Vielzahl von Modulen M umfasst. Die Module können beispielsweise Maschinen, Roboter, Transportfahrzeuge, etc. sein. Insbesondere können die jeweiligen Module M jeweils mindestens einen Prozessor umfassen, so dass eine computergestützte Simulation zumindest teilweise verteilt auf den Modulen ausführbar ist.

Die Vorrichtung 100 und das modulare System TS sind vorzugsweise miteinander gekoppelt. Beispielsweise kann es sich bei der Kopplung um eine Datenverbindung handeln, über welche Informationen über das modulare System TS an die Vorrichtung 100 übermittelt werden können.

Der industriellen Anlage TS ist insbesondere ein computergestütztes Simulationsmodell SM zugeordnet C, welches ein technisches, physisches und/oder chemisches Verhalten der industriellen Anlage TS abbildet. Das computergestützte Simulationsmodell SM umfasst vorzugsweise modulspezifische Simulationsmodelle SMi der jeweiligen Module M der industriellen Anlage TS. Das computergestützte Simulationsmodell SM kann beispielsweise betriebsbegleitend zum Betrieb der industriellen Anlage TS ausgeführt werden.

Dem computergestützten Simulationsmodell SM ist ein Strukturdatensatz SSP zugeordnet. Der Strukturdatensatz SSP beschreibt Modultypen und Modulparameter der modulspezifischen Simulationsmodelle SMi der Module M und Kopplungen zwischen diesen modulspezifischen Simulationsmodellen der Module, entsprechend der Kopplung der realen Module M. Außerdem beschreibt der Strukturdatensatz SSP vorzugsweise die verteilte Simulationsarchitektur SA zum Ausführen des computergestützten Simulationsmodells SM, d.h. inwiefern die Ausführung des computergestützten Simulationsmodells auf einzelnen Modulen verteilt ist.

Die Vorrichtung 100 kann beispielsweise als Teil einer Steuerungseinheit der industriellen Anlage realisiert sein. So kann die industrielle Anlage beispielsweise mittels einer computergestützten Simulation gesteuert werden.

Die Vorrichtung 100 umfasst eine erste Schnittstelle 101, eine Detektionseinheit 102, eine Analyseeinheit 103, eine zweite Schnittstelle 104, eine erste Aktualisierungseinheit 105, eine zweite Aktualisierungseinheit 106 und eine Ausführungseinheit 106. Diese Einheiten können insbesondere miteinander gekoppelt sein, um Daten/Informationen auszutauschen.

Über die erste Schnittstelle 101 wird das computergestützte Simulationsmodell SM und der, dem Simulationsmodell zugeordneter Strukturdatensatz SSP eingelesen. Beispielsweise können das Simulationsmodell SM und der Strukturdatensatz SSP von einer Speichereinheit, die der Vorrichtung 100 zugeordnet ist, eingelesen werden.

Die Detektionseinheit 102 ist beispielsweise mit einem Sensor der industriellen Anlage TS verbunden, der Daten über aktive bzw. vorhandene Module M der industriellen Anlage liefert. Die Detektionseinheit 102 ist derart eingerichtet, eine Änderung eines Moduls zu detektieren und Informationen über das geänderte Modul M* auszugeben. Beispielsweise kann ein neues Modul M* in der industriellen Anlage TS in Betrieb genommen und mit mindestens einem weiteren Modul M der industriellen Anlage TS gekoppelt werden. Über die erste Schnittstelle 101 kann ein modulspezifisches Simulationsmodell SMi*, das das geänderte Modul M* abbildet, eingelesen werden.

Die Analyseeinheit 103 ist derart eingerichtet, einen Modultyp TYP des geänderten Moduls M* und mindestens eine Kopplungsinformation LINK über eine Kopplung des Moduls M* mit mindestens einem weiteren Modul der Anlage TS zu ermitteln. Beispielsweise können diese Informationen aus dem modulspezifischen Simulationsmodell SMi* ausgelesen werden.

Die zweite Schnittstelle 104 ist derart eingerichtet, eine Konfigurationsregel R in Abhängigkeit des Modultyps TYP und/oder in Abhängigkeit von Modulparametern des geänderten Moduls M* bereitzustellen.

Die Aktualisierungseinheit 105 ist derart eingerichtet, den Strukturdatensatz SSP und das computergestützte Simulationsmodell SM anhand der Konfigurationsregel R und in Abhängigkeit der Kopplungsinformation LINK des geänderten Moduls zu aktualisieren. Somit werden das Simulationsmodell SM und der Strukturdatensatz SSP entsprechend der aktuellen Konfiguration der industriellen Anlage eingerichtet. Eine Änderung eines Moduls M* wird folglich korrekt im Simulationsmodell SM und im Strukturdatensatz SSP abgebildet. Beispielsweise wird das modulspezifische Simulationsmodell SMi* des neuen Moduls M* in den Strukturdatensatz SSP aufgenommen und die Kopplungen zu weiteren Modulen entsprechend gespeichert. Des Weiteren wird die verteilte Simulationsarchitektur SA in Abhängigkeit der aktualisierten Konfiguration der Module M, M* bzw. der aktualisierten Konfiguration der modulspezifischen Simulationsmodelle, aktualisiert. Durch Hinzufügen des neuen Moduls M* mit einer entsprechenden Rechenkapazität, beispielsweise zum Ausführen des modulspezifischen Simulationsmodells SMi*, kann sich die Simulationsarchitektur SA ändern.

Die Ausführungseinheit 106 ist derart eingerichtet, das aktualisierte computergestützten Simulationsmodell SM* unter Berücksichtigung der aktualisierten, verteilten Simulationsarchitektur SA* auszuführen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zum computergestützten Simulieren eines modularen Systems mittels eines computergestützten Simulationsmodells des modularen Systems (TS), wobei das computergestützte Simulationsmodell modulspezifische Simulationsmodelle jeweiliger Module (M) des modularen Systems umfasst, die gemäß einer verteilten Simulationsarchitektur (SA) zumindest teilweise auf einem jeweiligen Modul ausführbar sind, mit den Verfahrensschritten:
- Einlesen (S1) eines Strukturdatensatzes (SSP), der dem computergestützten Simulationsmodell (SM) zugeordnet ist, wobei der Strukturdatensatz (SSP) Modultypen und Modulparameter der modulspezifischen Simulationsmodelle der Module, Kopplungen zwischen diesen modulspezifischen Simulationsmodellen der Module und die verteilte Simulationsarchitektur (SA) zum Ausführen des computergestützten Simulationsmodells (SM) beschreibt,
- Detektieren (S2) einer Änderung eines Moduls (M*) des modularen Systems (TS),
- Ermitteln (S3) eines Modultyps (TYP) des geänderten Moduls (M*) und mindestens einer Kopplungsinformation (LINK) über eine Kopplung des geänderten Moduls mit mindestens einem weiteren Modul des modularen Systems,
- Bereitstellen (S4) einer Konfigurationsregel (R) in Abhängigkeit des Modultyps (TYP) des geänderten Moduls (M*),
- Aktualisieren (S5) des Strukturdatensatzes (SSP) und des computergestützten Simulationsmodells (SM) anhand der Konfigurationsregel (R) und in Abhängigkeit der Kopplungsinformation (LINK) des geänderten Moduls,
- Ausgeben (S6) eines aktualisierten Strukturdatensatzes (SSP*), der eine aktualisierte, verteilte Simulationsarchitektur (SA*) umfasst, und eines aktualisierten, computergestützten Simulationsmodells (SM*), und
- Ausführen (S7) des aktualisierten, computergestützten Simulationsmodells (SM*) unter Berücksichtigung der aktualisierten, verteilten Simulationsarchitektur (SA*).

2. Computerimplementiertes Verfahren nach Anspruch 1, wobei die Simulationsarchitektur mittels eines Optimierungsverfahrens zur optimierten Verteilung einer Rechenleistung aktualisiert wird.

3. Computerimplementiertes Verfahren nach einem der vorhergehenden Ansprüche, wobei eine Änderung eines Moduls des modularen Systems ein Hinzufügen eines neuen Moduls, ein Entfernen eines vorhandenen Moduls und/oder eine Umorganisation oder Neukonfiguration von mindestens einem vorhandenen Modul des modularen Systems umfasst.

4. Computerimplementiertes Verfahren nach einem der vorhergehenden Ansprüche, wobei eine Änderung eines Moduls des modularen Systems eine Änderung einer Rechenleistung eines Moduls des modularen Systems zum Ausführen des jeweiligen modulspezifischen Simulationsmodells umfasst.

5. Computerimplementiertes Verfahren nach einem der vorhergehenden Ansprüche, wobei der Strukturdatensatz (SSP) und das computergestützte Simulationsmodell (SM) in Abhängigkeit der Modulparameter des modulspezifischen Simulationsmodells des geänderten Moduls aktualisiert werden.

6. Computerimplementiertes Verfahren nach einem der vorhergehenden Ansprüche, wobei die Konfigurationsregel (R) von mindestens einem Modulparameter des modulspezifischen Simulationsmodells des geänderten Moduls abhängig ist.

7. Computerimplementiertes Verfahren nach einem der vorhergehenden Ansprüche, wobei der Strukturdatensatz (SSP) gemäß dem "System Structure & Parametrization"-Standard definiert ist.

8. Vorrichtung (100) zum computergestützten Simulieren eines modularen Systems mittels eines computergestützten Simulationsmodells des modularen Systems (TS), wobei das computergestützte Simulationsmodell modulspezifische Simulationsmodelle jeweiliger Module (M) des modularen Systems (TS) umfasst, die gemäß einer verteilten Simulationsarchitektur (SA) zumindest teilweise auf einem jeweiligen Modul ausführbar sind, umfassend:
- eine erste Schnittstelle (101), die derart eingerichtet ist, einen Strukturdatensatz (SSP), der dem computergestützten Simulationsmodell (SM) zugeordnet ist, einzulesen, wobei der Strukturdatensatz (SSP) Modultypen und Modulparameter der modulspezifischen Simulationsmodelle (SMi) der Module, Kopplungen zwischen diesen modulspezifischen Simulationsmodellen der Module und die verteilte Simulationsarchitektur (SA) zum Ausführen des computergestützten Simulationsmodells (SM) beschreibt,
- eine Detektionseinheit (102), die derart eingerichtet ist, eine Änderung eines Moduls (M*) des modularen Systems (TS) zu detektieren,
- eine Analyseeinheit (103), die derart eingerichtet ist, einen Modultyp (TYP) des geänderten Moduls (M*) und mindestens eine Kopplungsinformation (LINK) über eine Kopplung des Moduls mit mindestens einem weiteren Modul des modularen Systems zu ermitteln,
- eine zweite Schnittstelle (104), die derart eingerichtet ist, eine Konfigurationsregel (R) in Abhängigkeit des Modultyps (TYP) des geänderten Moduls (M*) bereitzustellen,
- eine Aktualisierungseinheit (105), die derart eingerichtet ist, den Strukturdatensatz (SSP) und das computergestützten Simulationsmodell (SM) anhand der Konfigurationsregel (R) und in Abhängigkeit der Kopplungsinformation (LINK) des geänderten Moduls zu aktualisieren, und einen aktualisierten Strukturdatensatz (SSP*), der eine aktualisierte, verteilte Simulationsarchitektur (SA*) umfasst, und ein aktualisiertes, computergestütztes Simulationsmodell (SM*) auszugeben, und
- eine Ausführungseinheit (106), die derart eingerichtet ist, das aktualisierte computergestützten Simulationsmodell (SM*) unter Berücksichtigung der aktualisierten, verteilten Simulationsarchitektur (SA*) auszuführen.

9. Computerprogrammprodukt, das direkt in einen programmierbaren Computer ladbar ist, umfassend Programmcodeteile, die dazu geeignet sind, die Schritte des Verfahrens nach einem der Ansprüche 1 bis 7 durchzuführen.
